## Europäisches Patentamt
## European Patent Office
## Office européen des brevets

(19)

(11) Publication number: **0 061 877**
**A2**

(12)

# EUROPEAN PATENT APPLICATION

(21) Application number: **82301444.4**

(51) Int. Cl.³: **C 12 C 9/02**

(22) Date of filing: **19.03.82**

(30) Priority: **31.03.81 GB 8109973**

(43) Date of publication of application:
**06.10.82 Bulletin 82/40**

(84) Designated Contracting States:
**CH DE GB LI NL**

(71) Applicant: **The Distillers Company (Carbon Dioxide) Limited**
**Cedar House 39 London Road**
**Reigate Surrey(GB)**

(72) Inventor: **Wheldon, Alfred Gordon Tech. Development Dept.**
**Distillers Cy (Carbon Dioxide) Ltd. Chequers Lane**
**Dagenham Dock Essex RM9 6QH(GB)**

(74) Representative: **Rackham, Stephen Neil et al,**
**GILL JENNINGS & EVERY 53/64 Chancery Lane**
**London WC2A 1HN(GB)**

(54) **Method and apparatus for providing a hop extract.**

(57) An extraction of the bittering principles from hops comprises contacting hops with carbon dioxide in the liquid phase to dissolve the bittering principles and flavouring components of the hops in the liquid carbon dioxide in an extraction column (1, 2), passing at least part of the solution of extract to the base of a liquid-liquid contaction device (33), supplying heat to the output from the top of the liquid-liquid contaction device (33) and any remainder of the solution of extract not fed to the liquid-liquid contaction device (33) in a heat exchanger (8) to evaporate carbon dioxide vapour, compressing the evaporated carbon dioxide vapour in a compressor (11) to increase its liquefaction temperature, condensing the compressed vapour in the heat exchanger (8) to reform liquid carbon dioxide, and recycling the liquid carbon dioxide to contact the hops in the extraction column (1, 2). At least part of the heat evolved from the carbon dioxide vapour after its compression and during its change of state from vapour to liquid is used to evaporate carbon dioxide vapour from the solution of extract. An output from the base (23) of the liquid-liquid contaction device (33) contains the bittering principles of the hops and is substantially free of the flavouring components of the hops.

./...

Croydon Printing Company Ltd.

## METHOD AND APPARATUS FOR PROVIDING A HOP EXTRACT

Recently, it has been proposed to extract the bittering principles and flavour components from hops by extraction with carbon dioxide. Initial laboratory experiments using liquid carbon dioxide were successful but proved to be uneconomic in practice and consequently they were not developed commercially. Attempts were made to improve the economics of the process by using supercritical carbon dioxide as the extraction agent. Supercritical carbon dioxide can have a greater extractive power than liquid carbon dioxide and, at best, can have 80 times the extractive power of liquid carbon dioxide. In this case, its use can reduce the time and hence the energy required for extraction. However, the very high pressures that are involved in using such supercritical carbon dioxide leads to a very high cost of the extraction plant and also leads to high running costs. Additionally, such supercritical carbon dioxide is not so selective in its action as liquid carbon dioxide and consequently the resulting extract can include a number of unwanted components such as chlorophylls. This means that it is impossible to isomerise the resulting extract directly. Consequently the extract obtained by using supercritical carbon dioxide as the extraction medium has to be purified before it can be isomerised and converted into the soluble iso-acids that are used in the brewing industry, for example. This purification process requires further energy.

Our earlier British Patent Specification No 1 557 123 describes and claims a method and apparatus for obtaining an extraction of organic material using liquid carbon dioxide and, particularly describes and claims a method and apparatus for obtaining a very selective extraction of the bittering principles and flavouring components of hops. The method and apparatus described in this patent specification enables carbon dioxide in the liquid phase to be used as the extraction agent in a way which is sufficiently economically attractive for it to be used on a commercial scale. This method and apparatus is now achieving considerable commercial success because of the low running cost of the plant, and because of the relatively low cost of installation of the plant as a result of the plant using liquid carbon dioxide as the extraction agent instead of supercritical carbon dioxide, the pressures involved in the plant are very much lower and consequently the cost of the plant is relatively cheap compared with those using supercritical carbon dioxide as their extraction agents. Commercial success is being achieved because the extract obtained is of higher quality than are those produced using organic solvents or carbon dioxide in the supercritical state.

The specification discusses various modifications to the basic extraction plant by which it is possible to vary the proportion of bittering principles and flavouring components of the hops in the final extract that is obtained. In particular, these modifications concentrate on the enhancement of the flavouring component from the hops in the resulting extract. The extract obtained as described in this earlier specification always contains some of the flavouring components of the hops. When this extract is isomerised or when it is added to and boiled with the wort these flavouring components are largely lost or destroyed. The flavouring components which are mainly the hop oils are a valuable commodity and, as disclosed in this earlier specification can be added to a beer at the completion of its fermentation to enhance its flavour. The present invention is a further improvement on the basic method and apparatus described in our earlier British Patent Specification No 1 557 123 and enables extracts to be obtained that are usable in a less wasteful and more efficient way.

According to a first aspect of this invention, a method of extracting the bittering principles from hops comprises contacting hops with carbon dioxide in the liquid phase to dissolve the bittering principles and flavouring components of the hops in the liquid carbon dioxide, passing at least part of the solution of extract to the base of a liquid-liquid contaction device, supplying heat to the output from the top of the liquid-liquid contaction device and any remainder of the solution of extract not fed to the liquid-liquid contaction device to evaporate carbon dioxide vapour and thereby concentrate the solution of extract, compressing the evaporated carbon dioxide vapour to increase its liquifaction temperature, condensing the compressed vapour to reform liquid carbon dioxide, and recycling the liquid carbon dioxide to contact the hops, at least part of the heat evolved from the carbon dioxide vapour after its compression and during its change of state from vapour to liquid being used to evaporate carbon dioxide vapour from the solution of extract, the output from the base of the liquid-liquid contaction device containing the bittering principles of the hops and being substantially free of the flavouring components of the hops.

The method of extraction in accordance with the first aspect of this invention may include drawing off an upper fraction of the solution of extract in liquid carbon dioxide and passing this into an evaporator in which it is heated to evaporate carbon dioxide vapour, the evaporated carbon dioxide vapour being recompressed and condensed with the remainder of the carbon dioxide vapour and a product being obtained from the evaporator which contains a high proportion of flavouring components of the hops and a low proportion of the bittering principles of the hops.

According to a second aspect of this invention, an apparatus for the extraction of the bittering principles from hops includes at least one extraction column, a heat exchanger, a liquid-liquid contaction device, and a compressor, an outlet from the at least one extraction column being connected to the base of the liquid-liquid extraction device, the top of the liquid-liquid contaction device being connected to the base of one side of the heat exchanger, the top of the one side of the heat exchanger being connected to the inlet of the compressor and the outlet of the compressor being connected to the inlet of the other side of the heat exchanger, the outlet of the other side of the heat exchanger being connected to the inlet of the at least one extraction column and a product outlet being provided at the base of the liquid-liquid contaction device.

This apparatus enables a method in accordance with the first aspect of this invention to be carried out and thus enables a product which contains the bittering principles and which is substantially free of the flavouring components of the hops to be obtained from the first product outlet.

The apparatus may also include an evaporator connected to a further outlet from the one side of the heat exchanger located towards the top of the one side of the heat exchanger so that an upper liquid fraction drawn off through the further outlet from the one side of the heat exchanger is fed to the evaporator, the vapour outlet from the evaporator being connected to the compressor and a second product outlet being provided at the base of the evaporator. When this apparatus also includes an evaporator connected in this fashion, the product obtained from the second product outlet in the base of the evaporator is a product which contains a high proportion of flavouring components from the hops and a low proportion of the bittering principles of the hops.

Thus, the method and apparatus in accordance with this invention enables a hop extract which contains the bittering principles, namely the $\alpha$- and $\beta$- acids of the soft resin fraction of the hops and which is substantially free from the flavouring components, namely the hop oils, to be obtained. This product can be readily isomerised into the soluble iso-$\alpha$-acids and then these are simply added directly to liquid at almost any stage in a brewing process to provide and adjust the bitterness, but typically they are added to beer at the end of fermentation.

The extract which is high in hop oils may be improved so that it is substantially free of the bittering principles of the hops if it is cooled and left to precipitate. Typically if it is left at a temperature of approximately -20°C for a period of days the bittering principles precipitate out so that a product rich in hop oils may be decanted. Such a product is particularly valuable and since the bittering principles that are obtained are substantially free of the flavouring components a greater quantity of the flavouring components are available for collection separately.

When an extract is obtained which includes the flavouring components, principally the hop oils, but which is substantially free of the bittering principles this product may be added to a beer, at any stage, but preferably this is done after the fermentation is complete so that none of the flavouring components are destroyed, modified or lost during the earlier stages of the brewing process and then this extract affects the aroma and the hoppy taste of the resulting beer. Thus, by using this invention both the bitterness and the flavour of the resulting beer can be adjusted completely independently of each other which is a great advantage to the brewer since it provides a very much greater flexibility in the nature of the final product in regard to both of these parameters.

Preferably the apparatus includes means upstream of the at least one extraction column to prevent the liquid carbon dioxide vaporising during flow through the at least one extraction column. These means may comprise a pump to increase the pressure of the liquid carbon dioxide and so raise its equilibrium temperature so that a differential is established between the temperature of the liquid carbon dioxide and its equilibrium temperature, but preferably the means includes a cooler upstream of the at least one extraction column and under the control of a temperature sensor to cool the liquid carbon dioxide to a temperature below its equilibrium temperature at the pressure subsisting in the extraction column. Preferably the output temperature for the cooler is also selected to be that giving maximum solubility of the bittering principles in liquid carbon dioxide. This temperature has been found by experiment to be in a range of from 5°C to 10°C.

A particular embodiment of a method and apparatus in accordance with this invention will now be described with reference to the accompanying drawing which is a diagram of the apparatus, and described and constrasted with the prior art with reference to the accompanying examples.

The basic apparatus comprises two similar extraction chambers 1 and 2 arranged in parallel with a pair of isolating valves 3 and 4 at opposite ends of each chamber 1 and 2 respectively. Each chamber is formed as a column and includes a filter covering its inlet and outlet to prevent the hops from leaving the chamber but to allow liquid carbon dioxide to percolate through the hops. The outlets of the tops of the chambers 1 and 2 are connected through a pipe 5 to two separate flow control valves 6 and 6a. The outlet from the flow control valve 6 leads to one side 7 of a heat exchanger 8 whilst the outlet from flow control 6a leads to the base of a liquid-liquid contaction device 33. The flow control valves 6 and 6a are controlled by a liquid level sensor 9 so that a substantially constant level is maintained in the one path 7 of the heat exchanger 8.

A pipe 10 leads from an outlet of the one side 7 of the heat exchanger 8 to the inlet of a compressor 11. The outlet of the compressor 11 is connected to a heat exchanger 12 which, in this example, is a cooler, and the outlet of the cooler 12 is connected to the other side 13 of the heat exchanger 8. An outlet on the other side 13 of the heat exchanger 8 is connected to a liquid receiver vessel 14 and an outlet from the liquid receiver vessel 14 is connected through an isolating valve 15 to an inlet of a sub cooler 16. The outlet of the sub cooler 16 leads directly into the inlet at the base of the extraction chambers 1 and 2 through the valves 3 and 4. The quantity of coolant passing through the sub cooler 16 is controlled by a flow control valve 17 under the control of a temper- ature sensor 18 which detects the temperature of the liquid carbon dioxide leaving the sub cooler 16 and varies the flow of coolant through the sub cooler 16 to maintain the outlet temperature of the carbon dioxide from the sub cooler 16 constant. The flow of coolant through the heat exchanger 12 is controlled by a flow control valve 19 under the control of a pressure sensor 20. The heat exchanger 12 serves to trim the overall heat balance in the system and, as the pressure in the system increases, the flow control valve 19 is opened to increase the degree of cooling that occurs in the heat exchanger 12.

The other side 13 of the heat exchanger 8 includes a vent outlet 21 controlled by a flow control valve 22 and the one side 7 of the heat exchanger 8 includes an outlet towards its base which leads into the top of the liquid-liquid contaction device 33. A first product outlet is provided in the base of the liquid-liquid contaction device 33 and this outlet is controlled by a flow control valve 24. The vent outlet 21 enables incondensible volatile materials to be vented from the other side 13 of the heat exchanger 8 and the first product outlet 23 allows the matter that collects in the base of the liquid-liquid contaction device 33 to be extracted. The liquid receiver 14 includes a further inlet 25 under the control of a flow control valve 26 through which carbon dioxide is introduced into the system to fill the system initially and to make up any losses.

The one side 7 of the heat exchanger 8 includes a further outlet 27 controlled by a flow control valve 28 and this further outlet leads to an evaporator 29. The top of the evaporator is connected through a further flow control valve 30 to the pipe 10 and the base of the evaporator includes a second product outlet 31 controlled by a flow control valve 32.

The entire plant is made from stainless steel and the plant is arranged to operate at pressures of the order of 750p.s.i.g. (51 bar). Since the heat exchanger 8 has carbon dioxide in both its one and its other sides, 7 and 13, the differential pressure between the two sides of the heat exchanger 8 is merely that generated by the compressor 11 and this differential pressure is quite low, of the order of 100 p.s.i.g. (7 bar). The small differential pressure between the one and the other side of the heat exchanger simplifies its construction.

When the valves 3 are closed to isolate the extraction chamber 1, the chamber 1 is packed with milled hops. The air is purged from the chamber 1 using gaseous carbon dioxide and then the valves 3 are opened to pressurise the chamber 1 and allow liquid carbon dioxide to percolate up through the hops in the chamber 1. As the liquid carbon dioxide percolates through the extraction chamber 1 it extracts the parts of the hops which are soluble in liquid carbon dioxide. Principally, the matter extracted from the hops are the hop oils and the $\alpha$- and $\beta$- acid fraction of the soft resins contained in the hops, the $\alpha$- acids forming the bittering principles of the hops and the hop oils forming the main flavour and aroma components of the hops. The solution of the extracted matter passes along the pipe 5 and through the control valves 6 and 6a into the one side 7 of the heat exchanger 8 and to the base of the liquid-liquid contaction device 33. In the heat exchanger 8 the solution is warmed causing a change of state of the carbon dioxide to occur and the carbon dioxide vapour boiled off from the solution then leaves the one side 7 of the heat exchanger 8 through the pipe 10 to the compressor 11.

The carbon dioxide vapour is compressed in the compressor 11 and, during compression, the vapour is heated on account of the work done in compressing the gas. Compressed gas passes through the heat exchanger 12 and then through the other side 13 of the heat exchanger 8. In this other side 13 of the heat exchanger 8 the compressed gas changes its state and reforms liquid carbon dioxide. The heat removed from the compressed gas as it is initially cooled to the condensation temperature and then the latent heat evolved as the carbon dioxide changes its state from the vapour to the liquid phase is transferred to the solution of extract in the one side 7 of the heat exchanger 8. This leads to boiling of the solution to change the state of the liquid carbon dioxide in the one part 7 of the heat exchanger 8 to evolve further carbon dioxide vapour from the solution in the one side 7 of the heat exchanger 8. The liquid carbon dioxide formed in the other side 13 of the heat exchanger 8 passes into a liquid receiver 14 where any carbon dioxide vapour entrained with the liquid carbon dioxide is separated.

The liquid carbon dioxide from the liquid receiver 14 then passes through a flow control valve 15 to a sub cooler 16 where it is cooled to a temperature below its equilibrium temperature at the pressure subsisting in the sub cooler 16 and so reduced below its boiling point. It has been found that if the liquid carbon dioxide is cooled to a temperature of 8°C a particularly beneficial extraction occurs in the chambers 1 and 2. Therefore, a temperature sensor 18 controls the flow of coolant through the sub cooler 16 via the flow control valve 17 to ensure that liquid carbon dioxide leaves the sub cooler 16 at a temperature of 8°C. At this temperature, it is also sufficiently far below its boiling point at the pressure subsisting at this point and in the extraction chambers 1 or 2 to prevent the liquid carbon dioxide from boiling in the extraction chambers 1 or 2 so that substantially no carbon dioxide vapour is present in the extraction chambers 1 or 2 thus ensuring the maximum contact between liquid carbon dioxide and hops in the extraction chambers 1 or 2. The liquid carbon dioxide at a temperature of 8°C is then recycled through the extraction chamber 1 and then through the remainder of the system.

The liquid carbon dioxide is recycled throughout the system and as the carbon dioxide is evaporated from the one side 7 of the heat exchanger 8, the concentration of matter extracted from the hops, particularly the concentration of the $\alpha$- and $\beta$-acids builds up in the secondary path of the heat exchanger until the concentration of $\alpha$- and $\beta$-acids exceeds their solubility in liquid carbon dioxide. After this saturation point has been reached the $\alpha$- and $\beta$-acids are precipitated from solution and form a separate mobile layer which falls to the lowermost end of the one side of the heat exchanger 8, and from there, falls down into the liquid-liquid contaction device 33. In the liquid-liquid contaction device 33 this separate phase, which as it enters the liquid-liquid contaction device 33 contains some hop oils, flows in counter current to the solution containing matter extracted from the hops which is introduced towards the base of the liquid-liquid contaction device 33. This counter flow of the solution is not saturated with respect to the hop oils and consequently the solution of liquid carbon dioxide strips hop oils from the precipitated $\alpha$- and $\beta$-acids so that the $\alpha$- and $\beta$-acids which collect in the base of the liquid-liquid contaction device 33 are substantially free of hop oils. The hop oils stripped from the $\alpha$- and $\beta$-acids then pass into the one side 7 of the heat exchanger 8. The $\alpha$- and $\beta$- acids can be withdrawn from the base of the liquid-liquid contaction device 33 via the outlet 23 and flow control valve 24. The proportion of hop oils in the solution contained in the one side 7 of the heat exchanger 8 builds up and since the $\alpha$- and $\beta$-acids are the densest components, the upper fraction of the liquid in the one side 7 of the heat exchanger 8 contains the smallest proportion of α- and β-acids and the highest proportion of hop oils.  A proportion of this upper liquid fraction is withdrawn from the one side 7 of the heat exchanger 8 via the pipe 27 and the flow control valve 28 and fed to the evaporator 29.  This solution is evaporated in the evaporator 29 and the carbon dioxide vapour that is boiled off is returned to the pipe 10 and thence to the compressor 11 and recycled through the plant.  The residue remaining in the base of the evaporator 29 is drawn off through the second product outlet 31 under the control of the control valve 32, and consists of a high proportion of hop oils with a low proportion of α- and β-acids of the soft resins of the hops.

Once all the matter has been extracted from the hops in the extraction chamber 1 the flow control valves 6, 6a and 15 are closed and the liquid carbon dioxide remaining in the extraction chamber 1 is used to purge air from the liquid extraction chamber 2 and also to partly pressurise extraction chamber 2.  Valves 3 are then closed to isolate the spent hops in the extraction chamber 1 and the flow control valves 6, 6a and 15 are once again opened to allow extraction to continue only this time the liquid carbon dioxide passes through the hops contained in the extraction chamber 2.  Whilst the hops in the extraction chamber 2 are being extracted, the spent hops from extraction chamber 1 are removed from the chamber 1 and the chamber is re-packed with fresh hops.

Any air remaining with the hops in the extraction chambers 1 and 2 after the flushing operation of carbon dioxide tends to build up in the primary path 13 of the heat exchanger 8.  This build up of air, particularly the oxygen contained in the air, leads to oxidative changes in the matter extracted from the hops which impairs the quality of the extract.  Accordingly, incondensible volatile impurities in the primary path of the heat exchanger are vented through the outlet 21 under the control of the flow control valve 22. This enables all of the air and other gaseous impurities present in the system to be vented and removed from the system and this ensures that ahigh quality extract is obtained.

The heat exchanger 12 is used to trim the thermal equilibrium of the entire system. In general, the heat required for vaporising the liquid carbon dioxide from the solution of extract in the one side of the heat exchanger 8 is more or less balanced by the heat evolved on the change of state of the gaseous carbon dioxide into liquid carbon dioxide in the other side 13 of the heat exchanger 8. The sub cooler 16 balances the heat added to the system by the work done on the gas in the compressor 11 but, depending upon the ambient temperatures surrounding the plant and the efficiency of its thermal insulation it may be necessary to provide some additional control. This is achieved by the heat exchanger 12 which is used to absorb excess heat from the system. The flow of coolant through the heat exchanger 12 is controlled via the flow control valve 19 from a pressure controller which senses the pressure subsisting in the one side 7 of the heat exchanger 8. It has been found that if the pressure subsisting in the one side 7 of the heat exchanger 8 is controlled so that a temperature of just above 10°C occurs on the one side of the heat exchanger 7 the plant operates in a very satisfactory manner since carbon dioxide hydrate $CO_2.8H_2O$ is not formed on the heat exchange surfaces of the one side of the heat exchanger 8 and so impede the transfer of heat between the two sides of the heat exchanger 8.

The ratio of the flow of the solution of extract in liquid carbon dioxide flowing through the valves 6 and 6a is not critical provided that there is sufficient flow of the extract into the base of the contaction device 33 to strip the hop oils from the α- and β- acids in the contaction device 33. Naturally it is possible for the total flow of extract matter solution to pass through the contaction device 33. However, typically for one part passing through the valve 6a and the contaction device 33 there are five parts passing through the valve 6 directly into the one side 7 of the heat exchanger 8.

To obtain a more pure yield of hop oils and a greater yield of α- and β- acids the product obtained from the product outlet 31 of the evaporator 29 is stored for a priod of time at a low temperature, typically -20°C. Under these conditions, the α- and β-acids crystallise and precipitate out of solution with the hop oils so that the precipitate may be readily removed, for example, using a decanting step.

Example 1

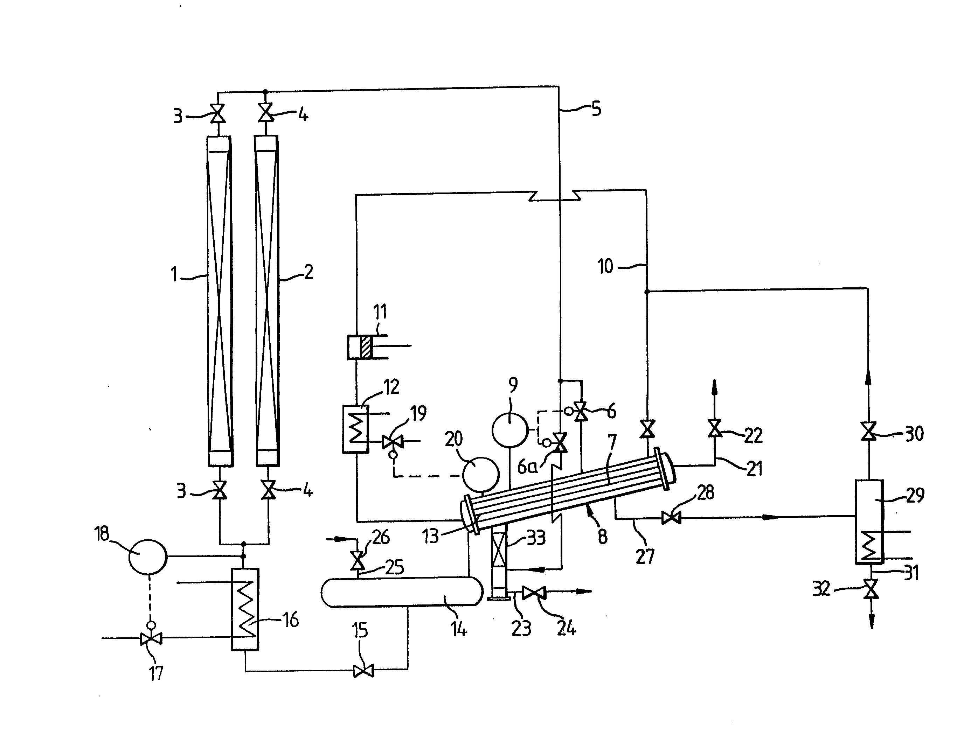

An extraction was carried out using the apparatus shown and described with reference to Figure 1 but, during the entire extraction the valves 6a, 28 and 30 were closed. Thus the apparatus functioned in an exactly similar way to that shown and described in British Patent Specification No 1 557 123, and can thus be considered to provide a demonstration of a conventional hop extraction using liquid carbon dioxide.

Column 1 was packed with 2 kg of milled Wye Target hop pellets (α-acid content 7.76%, oil content 1.1 ml/100g) and extracted for $4\frac{1}{2}$ hours with liquid carbon dioxide at a flow rate of 50 lb/h (22.7 kg/h) at a temperature of 7°C. During this period, column 2 was packed with a similar quantity of milled hop pellets. The extract accumulated in the base of the evaporator 8, and filled the liquid-liquid extraction device 33 which operated solely as a collector. After $4\frac{1}{2}$ hours, the liquid carbon dioxide flow was connected to column 2, while column 1 was disconnected. The carbon dioxide remaining in column 1 was allowed to evaporate, and its spent hops were discharged and the column repacked with fresh milled hops. This procedure was continued until a total of nine columns (18 kg of hops) had been extracted. The extract was removed at intervals from the outlet 23 and bulked in a glass container. The resulting extract was analysed and found to have the following composition:-

| | |
|---|---|
| α-acids | 41.7% |
| β-acids | 29.0% |
| hop-oils | 6.0ml./100g. |

## Example 2

In this example an extraction was carried out precisely as shown and described with reference to Figure 1 but, during the entire extraction the valve 6 was completely closed so that the entire flow of liquid carbon dioxide containing extracted matter was introduced into the base of the liquid-liquid contaction device 33. A similar extraction to that described in Example 1 was carried out using similar quantities of hops and carbon dioxide. The extract taken from the outlet 23 in the base of the liquid-liquid contaction device 33 via valve 24 had the following composition:-

| | |
|---|---|
| α-acids | 43.7% |
| β-acids | 28.8% |
| hop-oils | 0.7ml./100g. |

The oil collection device 29 was then rendered operational by opening valves 28 and 30. The oil-rich extract that was collected via valve 32 had the following composition:-

| α-acids | 24.8% |
|---------|-------|
| β-acids | 28.8% |
| hop-oils | 34ml./100g. |

The results of examples I and II clearly demonstrate, firstly, that by using the method and apparatus in accordance with this invention it is possible to obtain a hop extract that is substantially free of flavouring components, and secondly that, in this case, the separate recovery of the flavouring components is enhanced.

CLAIMS

1.     A method of extracting the bittering principles from hops comprises contacting hops with carbon dioxide in the liquid phase to dissolve the bittering principles and flavouring components of the hops in the liquid carbon dioxide, passing at least part of the solution of extract to the base of a liquid-liquid contaction device, supplying heat to the output from the top of the liquid-liquid contaction device and any remainder of the solution of extract not fed to the liquid-liquid contaction device to evaporate carbon dioxide vapour and thereby concentrate the solution of extract, compressing the evaporated carbon dioxide vapour to increase its liquifaction temperature, condensing the compressed vapour to reform liquid carbon dioxide, and recycling the liquid carbon dioxide to contact the hops, at least part of the heat evolved from the carbon dioxide vapour after its compression and during its change of state from vapour to liquid being used to evaporate carbon dioxide vapour from the solution of extract, the output from the base of the liquid-liquid contaction device containing the bittering principles of the hops and being substantially free of the flavouring components of the hops

2.     A method according to claim 1, including drawing off an upper fraction of the solution of extract in liquid carbon dioxide and passing this into an evaporator in which it is heated to evaporate carbon dioxide vapour, the evaporated carbon dioxide vapour being compressed and condensed with the remainder of the carbon dioxide vapour and a product being obtained from the evaporator which contains a high proportion of flavouring components of the hops and a low proportion of the bittering principles of the hops.

3.     A method according to claim 2, in which the product is cooled and left to precipitate, such as by cooling it to a temperature of approximately $-20^{\circ}C$ for a period of days, so that the bittering principles precipitate out and a product rich in hop oils is decanted.

4.     An apparatus for carrying out the method of claim 1, including at least one extraction column (1,2), a heat exchanger (8), a liquid-liquid contaction device (33), and a compressor (11), the outlet (3) from the at least one extraction column (1,2) being connected to the base of the liquid-liquid extraction device (33), the top of the liquid-liquid contaction device (33) being connected to the base of one side (7) of the heat exchanger (8), the top of the one side (7) of the heat exchanger (8) being connected to the inlet of the compressor (11) and the outlet of the compressor (11) being connected to the inlet of the other side (13) of the heat exchanger (8), the outlet of the other side (13) of the heat exchanger (8) being connected to the inlet (3,4) of the at least one extraction column (1,2) and a product outlet (23) being provided at the base of the liquid-liquid contaction device (33).

5.     An apparatus according to claim 4, which also includes an evaporator (29) connected to a further outlet (28) from the one side (7) of the heat exchanger (8) located towards the top of the one side (7) of the heat exchanger (8) so that an upper liquid fraction drawn off through the further outlet (28) from the one side (7) of the heat exchanger (8) is fed to the evaporator (29), the vapour outlet (30) from the evaporator being connected to the compressor (41) and a second product outlet (32) being provided at the base of the evaporator (29).

6.     An apparatus according to claim 4 or 5, which also includes means upstream of the at least one extraction column (1,2) to prevent the liquid carbon dioxide vapourising during flow through the at least one extraction column (1).

7. An apparatus according to claim 6, in which the means includes a cooler (16) upstream of the at least one extraction column (1,2) and under the control of a temperature sensor (18) to cool the liquid carbon dioxide to a temperature below its equilibrium temperature at the pressure subsisting in the extraction column (1,2).

8. An apparatus according to any one of claims 4 to 7. which also includes a cooler (12) downstream of the compressor (11) and under the control of a pressure sensor (20) to provide the overall heat balance of the apparatus.

9. An apparatus according to any one of claims 4 to 8, which also includes a liquid receiver (14) in between the outlet from the other side (13) of the heat exchanger (8) and the at least one extraction column (1,2).